# EUROPÄISCHE PATENTANMELDUNG

(11) **EP 2 003 030 A2**
(43) Veröffentlichungstag der Anmeldung: **17.12.2008**
(21) Anmeldenummer: 07024121.1
(22) Anmeldetag: 12.12.2007
(51) Int. Cl.: B60S 9/10

(54) **Nutzfahrzeug-Abstützeinrichtung**

(30) Priorität: 15.06.2007 DE 202007008383 U
(71) Anmelder: H & B Fertigungstechnik GmbH, 5303 Thalgau (AT); ACA Spezialfahrzeuge GmbH, 4863 Seewalchen am Attersee (AT)
(72) Erfinder: Rappold, Andreas, 4863 Seewalchen (AT); Weber, Christian, 5111 Bürmoos (AT)
(74) Vertreter: Schmitz, Hans-Werner

(57) **Zusammenfassung**

1. Nutzfahrzeug-Abstützeinrichtung (1)
- mit einem mittigen Träger (11), der mittels einer Befestigungseinrichtung (12, 13) lösbar am Nutzfahrzeug (2) fixierbar ist,
- mit zwei Stützen (9, 10), die an den freien Endbereichen (14, 15) des Trägers (11) schwenkbar angelenkt sind, und
- mit einer Antriebseinrichtung (16, 17) pro Stütze (9, 10), die jeweils am Träger (11) abgestützt ist und die über je eine Kniehebelanordnung (18, 19) mit der zugeordneten Stütze (9 bzw. 10) verbunden ist.

## Beschreibung

Die Erfindung betrifft eine Nutzfahrzeug-Abstützeinrichtung gemäß Anspruch 1.

Derartige Abstützeinrichtungen sind beispielsweise für Nutzfahrzeuge erforderlich, die mit Kränen oder anderen Arbeitsgerätschaften bestückt sind, um die Fahrzeuge während der Durchführung der Arbeiten sicher auf der Aufstandsfläche halten zu können.

Beispielsweise bei Kranwagen werden hierfür Hydraulikzylinder verwendet, die das gesamte Fahrzeug über an den Hydraulikkolben angeordnete Teller bodenseitig abstützen. Eine derartige Abstützeinrichtung ist jedoch in aller Regel eine fahrzeugfest montierte Einrichtung, die nicht als Anbaugerät für andere Nutzfahrzeugtypen verwendbar ist.

Es ist daher Aufgabe der vorliegenden Erfindung, eine Nutzfahrzeug-Abstützeinrichtung zu schaffen, die universell einsetzbar ist und die hohe Stützkräfte übertragen kann.

Die Lösung dieser Aufgabe erfolgt durch die Merkmale des Anspruchs 1.

Durch Verwendung einer Kniehebelanordnung pro vorgesehener Stütze ist es möglich, hohe Stützkräfte über die Antriebseinrichtung auf die Stützen aufzubringen.

Die erfindungsgemäße Abstützeinrichtung zeichnet sich durch einen robusten Aufbau und eine universelle Anwendbarkeit bei unterschiedlichsten Nutzfahrzeugtypen aus, da sie auf einfache Art und Weise über geeignete Anbauadapter an den jeweiligen Nutzfahrzeugen angebracht werden kann.

Die Unteransprüche haben vorteilhafte Weiterbildungen der Erfindung zum Inhalt.

Weitere Einzelheiten, Merkmale und Vorteile der Erfindung ergeben sich aus nachfolgender Beschreibung an Hand der Zeichnung.

Es zeigt:
Fig. 1 eine schematisch leicht vereinfachte perspektivische Darstellung eines Nutzfahrzeugs in Form eines Schleppers mit daran angebrachter Abstützeinrichtung und eines Arbeitsgerätes in Form eines Krans,
Fig. 2 eine Seitenansicht der in Fig. 1 dargestellten Anordnung von Nutzfahrzeug und Abstützeinrichtung sowie des angebrachten Arbeitsgeräts in Form des Krans,
Fig. 3 eine perspektivische Darstellung der Abstützeinrichtung gemäß Fig. 1,
Fig. 4 eine Vorderansicht der Abstützeinrichtung gemäß Fig. 3,
Fig. 5 eine Schnittdarstellung der Abstützeinrichtung entlang der Linie B - B in Fig. 4, und
Fig. 6 eine Schnittdarstellung der Abstützeinrichtung entlang der Linie A - A in Fig. 4.

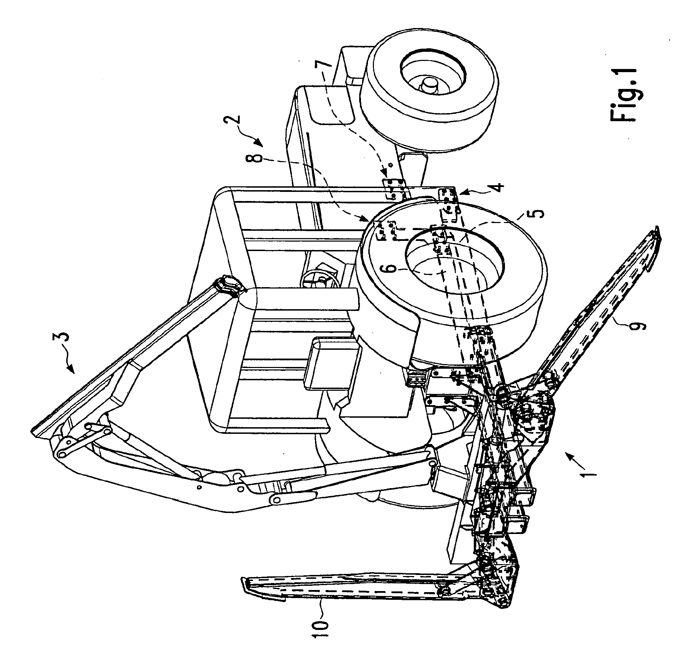

In Fig. 1 ist ein Nutzfahrzeug 2 in Form eines Schleppers mit einem daran angebrachten Arbeitsgerät in Form eines Krans 3 perspektivisch dargestellt. Im Rahmen der vorliegenden Erfindung werden unter dem Begriff "Nutzfahrzeuge" neben den üblicherweise darunter verstandenen Fahrzeugen insbesondere auch Zugmaschinen, Schlepper, Traktoren und Trägerfahrzeuge verstanden. Eine erfindungsgemäße Abstützeinrichtung 1 ist über daran montierte Träger 5, 6 mit Anbauadaptern 4 durch Befestigungsplatten 7, 8 am Nutzfahrzeug 2 befestigt. Wie aus der Zeichnung ersichtlich, weist die Abstützeinrichtung 1 zwei schwenkbare Stützen 9, 10 auf, durch die das Nutzfahrzeug 2 abgestützt werden kann. In der Fig. 1 ist die Stütze 10 in einer senkrechten End- bzw. Transportstellung dargestellt, während die Stütze 9 in einer abgesenkten Arbeitsposition gezeigt ist. Während in dieser perspektivischen Darstellung die erfindungsgemäße Abstützeinrichtung 1 am Heck des Nutzfahrzeugs 2 befestigt ist, ist es bei anderen Nutzfahrzeugtypen, deren verschiedenartigen Einsatzbedingungen bzw. den dabei ggf. verwendeten spezifischen Arbeitsgerätschaften auch möglich, die erfindungsgemäße Abstützeinrichtung 1 an der Vorderseite des Fahrzeugs 2 anzubringen. In der Arbeitsposition sind natürlich beide Stützen 9 und 10 abgesenkt, wobei es möglich ist, das Nutzfahrzeug 2 über die Stützen 9 und 10 anzuheben, um es aus einer geneigten Stellung in die Horizontale anzuheben.

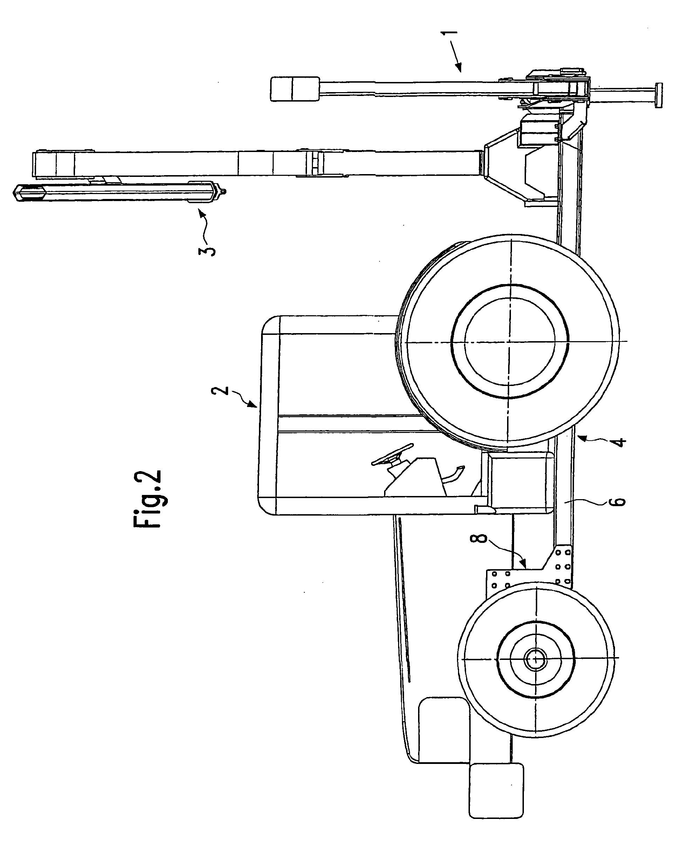

Fig. 2 ist eine Seitenansicht des Nutzfahrzeugs 2 und der Abstützeinrichtung 1 der vorliegenden Erfindung sowie des angebrachten Krans 3. Wie aus dieser Figur in Verbindung mit der perspektivischen Darstellung von Fig. 1 ersichtlich, können durch die universellen Befestigungsmöglichkeiten der Abstützeinrichtung 1 am Fahrzeug 2 nahezu alle denkbar möglichen Abstützungen von Nutzfahrzeugen und deren Lasten bzw. Arbeitsgeräten auf schwierigem Untergrund bzw. Neigungen ausgeführt werden.

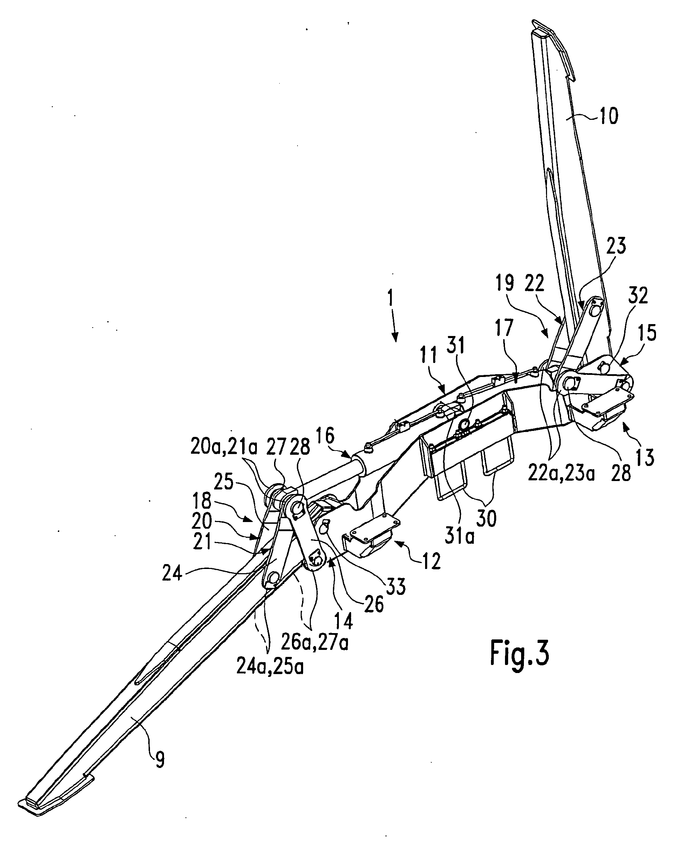

Fig. 3 ist eine perspektivische Darstellung der Abstützeinrichtung 1 gemäß Fig. 1. An einem Träger 11 sind Befestigungseinrichtungen 12, 13 (hier als horizontale Plattenkonsolen ausgeführt) zur lösbaren Befestigung der Abstützeinrichtung 1 am Fahrzeug 2 vorgesehen. Zwei Antriebseinrichtungen 16, 17, die vorteilhafterweise als Hydraulikzylinder ausgebildet sein können, sind zur Betätigung der beiden Stützen 9, 10 am Mittelabschnitt des Trägers 11 über einen Bolzen 31 und unter Verwendung einer eingefügten Distanzscheibe 31a abgestützt beziehungsweise befestigt. An freien Endbereichen 14, 15 des Trägers 11 sind die beiden Stützen 9, 10 mittels Bolzen 32 unter Verwendung von eingefügten Gleitlagern 33 schwenkbar angelenkt und werden über zugehörige Kniehebelanordnungen 18, 19 betätigt. Die Kniehebelanordnungen 18, 19 sind identisch ausgebildet und werden nachfolgend anhand der Kniehebelanordnung 18 beschrieben. Die Kniehebelanordnung 18 weist zwei beabstandet zueinander angeordnete Kniehebelpaare 20, 21 auf. Die Kniehebelpaare 20, 21 sind jeweils aus zwei Drucklenkern 24, 25 und zwei Zuglenkern 26, 27 zusammengesetzt, die an einem ihrer Enden 20a, 21a bzw. 22a, 23a auf einem, beiden Kniehebelpaaren 20, 21 bzw. 22, 23 gemeinsamen Schwenkbolzen 28 schwenkbeweglich gelagert bzw. mit diesem verbunden sind. Dem Schwenkbolzen 28 gegenüberliegende andere Enden 24a, 25a der Drucklenker 24, 25 sind an der Stütze 9 bzw. 10 befestigt und dem Schwenkbolzen 28 gegenüberliegenden Enden 26a, 27a der Zuglenker 26, 27 sind am Träger 11 befestigt.

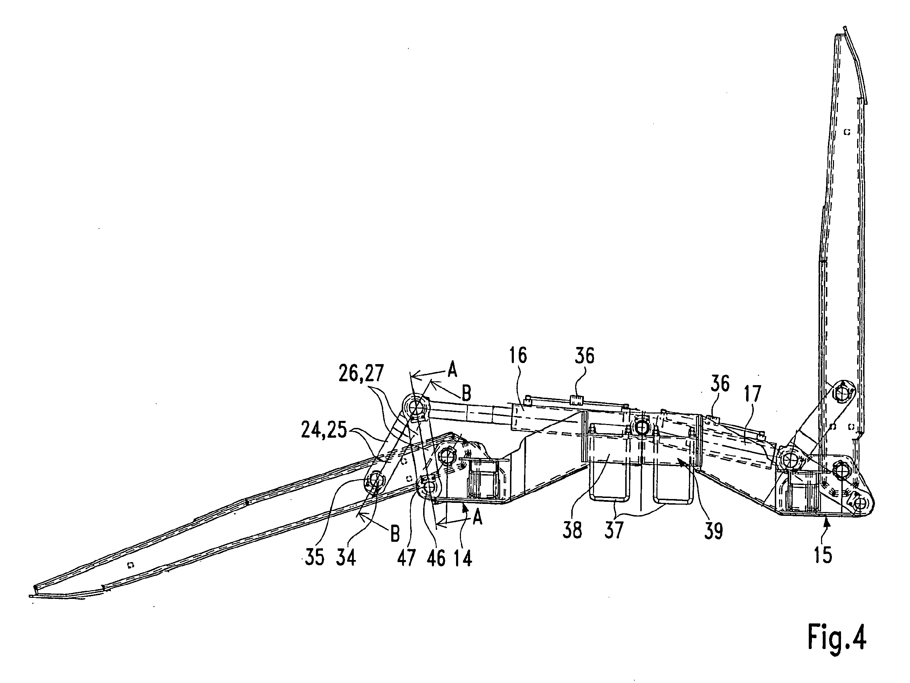

In Fig. 4 ist eine Vorderansicht der erfindungsgemäßen Abstützeinrichtung 1 dargestellt. Wie aus dieser Figur ersichtlich, sind die in Fig. 1 beschriebenen, paarweise angeordneten Zuglenker 26, 27 jeweils entsprechend im unteren Bereich am freien Endbereich 14 über einen Bolzen 47 befestigt, der in ein Gleitlager 46 eingefügt ist. Die Befestigungspunkte bzw. Schwenkachse der Stütze 9 und der Zuglenker 26, 27 liegen, wie in Fig. 4 gekennzeichnet, auf einer gemeinsamen Linie C - C. Die paarweise angeordneten Drucklenker 24, 25 sind mit ihren unteren Enden an der Stütze 9 über einen Bolzen 34 befestigt, der in eine Bundbuchse 35 eingefügt ist.

Auf den beiden als Hydraulikzylinder ausgebildeten Antriebseinrichtungen 16, 17 ist zur Betätigung der beiden Kniehebelanordnungen 18 und 19 und der Stützen 9 und 10 jeweils ein doppelt entsperrbares Rückschlagventil 36 angeordnet.

Am mittleren Bereich des Trägers 11 sind zwei U-förmig ausgebildete Bügel 37 zur Aufnahme der jeweils längs unter dem Fahrzeug 2 verlaufenden Träger 5, 6 vorgesehen. Diese Bügel 37 sind, wie aus der Zusammenschau von Fig. 3 und Fig. 4 ersichtlich, in eine mittels einer Platte 38 doppelwandig ausgebildete geschweißte Befestigungsvorrichtung 39 eingefügt und fixieren die bei der Montage der Abstützeinrichtung 1 am Fahrzeug 2 eingeschobenen Träger 5, 6 über an ihren freien Enden ausgebildete Gewinde auf konventionelle Art und Weise mittels Unterlegscheiben und Muttern.

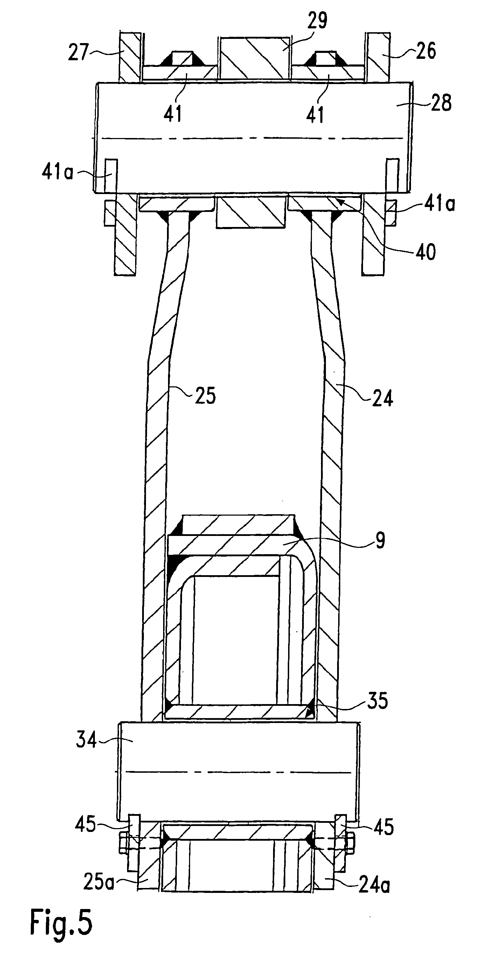

Fig. 5 zeigt eine Schnittdarstellung der Abstützeinrichtung 1 entlang der Linie B - B in Fig. 4. In dieser Figur ist die Verbindung der Drucklenker 24, 25 über den in einem Gleitlager 40 gelagerten Schwenkbolzen 28 mit dem an der Antriebseinrichtung 16 befestigten Anbindung (Zylinderkolbenstangenauge) 29 und den Zuglenkern 26, 27 dargestellt.

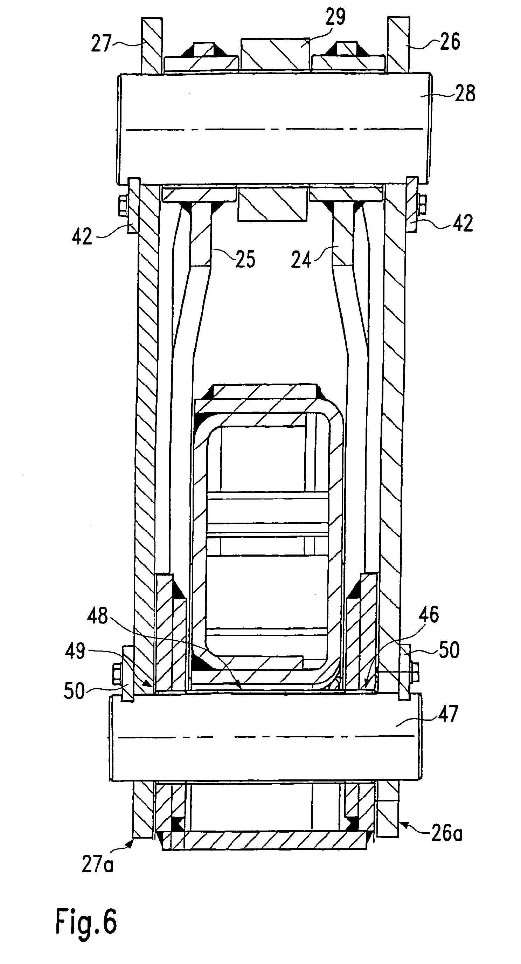

Hierbei sind an den Enden der Drucklenker 24, 25 Buchsen 41 vorgesehen, die vorzugsweise, wie hier beispielhaft dargestellt, am jeweiligen Drucklenker 24, bzw. 25 angeschweißt sind. Der Schwenkbolzen 28 ist in das die Buchsen 41 und die Anbindung 29 lagernde Gleitlager 40 eingeschoben und wird über an seinen Endbereichen ausgebildete Einkerbungen 41a durch an den Zuglenkern 26, 27 angeschraubte Sicherungsbleche 42 gesichert, die in der Schnittdarstellung von Fig. 6 sichtbar sind.

Die anderen Enden 24a, 25a der Drucklenker 24, 25 und der ebenfalls als Schweißkonstruktion ausgeführten Stütze 9 werden über die darin ausgebildete Bundbuchse 35 auf ähnliche Weise durch den an seinen Endbereichen eingekerbten Bolzen 34 schwenkbar befestigt, der durch an der Stütze 9 angeschraubte Sicherungsbleche 45 gesichert ist.

Fig. 6 zeigt eine Schnittdarstellung der Abstützeinrichtung 1 entlang der Linie A - A in Fig. 4. Im oberen Bereich dieser Figur ist die bereits in Fig. 5 beschriebene Befestigung beziehungsweise Verbindung der Zuglenker 26, 27, der Drucklenker 24, 25 und des an der Antriebseinrichtung 16 befestigten Anbindung 29 dargestellt.

An den Enden 26a, 27a der Zuglenker 26, 27 dient ein Bolzen 47 zur schwenkbaren Befestigung der Zuglenker 26, 27 am Träger 11, wobei der Bolzen 47 durch ein Gleitlager 46 und eine Distanzbuchse 48 gelagert ist. Eine Anlaufscheibe 49 ist zwischen den Zuglenkern 26, 27 und dem Träger 11 eingefügt. Die Sicherung des Bolzens 47 erfolgt auch hier über Einkerbungen an seinen beiden Endbereichen, in die Sicherungsbleche 50 eingreifen, die an den Zuglenkern angeschraubt sind.

Durch den oben beschriebenen konstruktiven Aufbau der erfindungsgemäßen Abstützeinrichtung wird eine bei den unterschiedlichsten Nutzfahrzeugtypen universell einsetzbare Abstützeinrichtung geschaffen, die durch die Kniehebelanordnung über die Antriebseinrichtung hohe Stützkräfte auf die Stützen aufbringen kann. Darüber hinaus wird eine einfache und wieder lösbare Montage über vorgesehene Anbauadapter an den jeweiligen Nutzfahrzeugen ermöglicht.

Zur Ergänzung der Offenbarung wird explizit zusätzlich auf die zeichnerische Darstellung der Erfindung in den Fig. 1 bis 6 Bezug genommen.

### Bezugszeichenliste

- 1: Abstützeinrichtung
- 2: Nutzfahrzeug
- 3: Kran
- 4: Anbauadapter
- 5,6: Träger
- 7,8: Befestigungsplatten
- 9,10: Stützen
- 11: Träger
- 12,13: Befestigungseinrichtung
- 14,15: freie Endbereiche
- 16,17: Antriebseinrichtung
- 18,19: Kniehebelanordnung
- 20,21;22,23: Kniehebelpaare
- 20a,21a;22a,23a: Enden (am Schwenkbolzen 28)
- 24,25: Drucklenker
- 24a,25a: Enden (an Stütze 9)
- 26,27: Zuglenker
- 26a, 27a: Enden (am Träger 11)
- 28: Schwenkbolzen
- 29: Anbindung
- 30: Bügel
- 31: Bolzen
- 31a: Distanzscheibe
- 32: Bolzen
- 33: Gleitlager
- 34: Bolzen
- 35: Bundbuchse
- 36: Rückschlagventil
- 37: Bügel
- 38: Platte
- 39: Befestigungsvorrichtung
- 40: Gleitlager
- 41: Buchsen
- 41a: Einkerbungen
- 42: Sicherungsbleche
- 45: Sicherungsblechey
- 46: Gleitlager
- 47: Bolzen
- 48: Distanzbuchse
- 49: Anlaufscheibe
- 50: Sicherungsbleche

## Patentansprüche

1. Nutzfahrzeug-Abstützeinrichtung (1)
- mit einem mittigen Träger (11), der mittels einer Befestigungseinrichtung (12, 13) lösbar am Nutzfahrzeug (2) fixierbar ist,
- mit zwei Stützen (9, 10), die an den freien Endbereichen (14, 15) des Trägers (11) schwenkbar angelenkt sind, und
- mit einer Antriebseinrichtung (16, 17) pro Stütze (9, 10), die jeweils am Träger (11) abgestützt ist und die über je eine Kniehebelanordnung (18, 19) mit der zugeordneten Stütze (9 bzw. 10) verbunden ist.

2. Nutzfahrzeug-Abstützeinrichtung nach Anspruch 1, **dadurch gekennzeichnet, dass** jede Kniehebelanordnung (18, 19) zwei beabstandet zueinander angeordnete Kniehebelpaare (20, 21 bzw. 22, 23) aufweist.

3. Nutzfahrzeug-Abstützeinrichtung nach Anspruch 2, **dadurch gekennzeichnet, dass** jedes Kniehebelpaar (20, 21 bzw. 22, 23) einen Drucklenker (24, 25) und einen Zuglenker (26, 27) aufweist, die an einem ihrer Enden (20a, 21a bzw. 22a, 23a) auf einem, beiden Kniehebelpaaren (20, 21; 22, 23) gemeinsamen Schwenkbolzen (28) schwenkbeweglich gelagert sind.

4. Nutzfahrzeug-Abstützeinrichtung nach Anspruch 3, **dadurch gekennzeichnet, dass** zwischen den Kniehebelpaaren (20, 21; 22, 23) auf dem gemeinsamen Schwenkbolzen (28) ein Distanzhalter (29) angeordnet ist.

5. Nutzfahrzeug-Abstützeinrichtung nach Anspruch 3 oder 4, **dadurch gekennzeichnet, dass** die Zuglenker (26, 27) mit ihren anderen Enden (26a, 27a) am Träger (11) und die Drucklenker (24, 25) an ihrem anderen Ende (24a, 25a) an der zugeordneten Stütze (9 bzw. 10) angelenkt sind.

6. Nutzfahrzeug-Abstützeinrichtung nach einem der Ansprüche 3 bis 5, **dadurch gekennzeichnet, dass** die Antriebseinrichtung (16, 17) mit dem den Kniehebelpaaren (20, 21; 22, 23) gemeinsamen Schwenkbolzen (28) verbunden ist.

7. Nutzfahrzeug-Abstützeinrichtung nach einem der Ansprüche 1 bis 6, **dadurch gekennzeichnet, dass** die Antriebseinrichtung (16, 17) als Hydraulikzylinder ausgebildet ist.
